(19) Europäisches Patentamt
European Patent Office
Office européen des brevets

(11) **EP 2 860 975 A1**

(12) **EUROPEAN PATENT APPLICATION**

(43) Date of publication:
**15.04.2015 Bulletin 2015/16**

(51) Int Cl.:
*H04N 13/00* (2006.01)

(21) Application number: **13306395.8**

(22) Date of filing: **09.10.2013**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **Thomson Licensing**
**92130 Issy-les-Moulineaux (FR)**

(72) Inventors:
• **Drazic, Valter**
  **35576 Cesson-Sévigné (FR)**
• **Robert, Philippe**
  **35576 Cesson-Sévigné (FR)**
• **Schlosser, Markus**
  **30625 Hannover (DE)**

(74) Representative: **Perrot, Sébastien**
  **Technicolor R&D France Snc**
  **975, avenue des Champs Blancs**
  **CS 17616**
  **35576 Cesson-Sévigné Cedex (FR)**

(54) **Method for processing at least one disparity map, corresponding electronic device and computer program product**

(57) In one embodiment, it is proposed a method for processing at least one disparity map associated to at least one left view and one right view of stereovision images. Such method is remarkable in that it comprises a step of determining at least one modified disparity map that comprises, for a given pixel or group of pixels, a modified disparity value determined in function of disparity values of said at least one disparity map associated to pixels that belong to a neighborhood of said given pixel or group of pixels, said disparity values being weighted in function of a value obtained from said at least one disparity map and at least one other disparity map.

FIG.2

EP 2 860 975 A1

**Description**

<u>Field of the invention</u>

The invention relates to the field of disparity maps determination techniques. More precisely, the invention is a technique of post-processing technique applied on a disparity map.

<u>Background of the invention</u>

This section is intended to introduce the reader to various aspects of art, which may be related to various aspects of the present invention that are described and/or claimed below. This discussion is believed to be helpful in providing the reader with background information to facilitate a better understanding of the various aspects of the present invention. Accordingly, it should be understood that these statements are to be read in this light, and not as admissions of prior art.

Disparity map of a pair of stereo images or views (obtained for example from two cameras positioned in a horizontal arrangement) can be defined as being a map comprising the set of the difference of position of a same pixel or a same group of pixels between such pair of stereo image. Therefore, a disparity map provides information to a position of an object in a three dimension scene due to the fact that a disparity value is inversely proportional to depth value. Indeed, objects with greater disparity appear to be closer to a viewer, and objects with smaller disparity appear to be farther to the viewer. Hence, determining an accurate disparity map is quite important in order to obtain a good 3D display. Moreover, it should be noticed that when a 3D movie must be displayed, several disparity maps must be determined from several temporally consecutive frames (each frame comprising at least a left view and one right view).

In the state of the art, several techniques are known to improve the accuracy of the determination of disparity maps (e.g. to obtain refinement of disparity maps). We can roughly classify these techniques in two groups: the one that focus on the improvement of the determination of a disparity map itself (either in the matching process, or more generally in depth generation algorithms), or on post processing of the determination of a disparity map (e.g. a processing (generally iterative) on a given disparity map). An example of a post-processing technique is described in the document WO 2013/079602 which discloses a technique that relies on the use of a selector filter applied to a given disparity map that selects either a first filter or a second filter to be applied to an area of a disparity map. Another example of a post-processing technique is described in the document US 2012/0321172. Such technique relies on the determination and the use of a confidence map (that comprise confidence values) in order to refine a disparity map. However, the determination of a confidence value necessitates to obtain a match quality information between a pixel or a group of pixels in the right image view and the corresponding pixel or group of pixels in the left image view. Hence, a drawback of such technique is that it is complex from a computation point of view. Another example of a post-processing technique is described in the document WO 2012/177166. Such technique is an iterative estimation technique of a disparity map. Another example of post-processing technique is described in the document US 2013/0176300 which uses a bilateral filter by taking into account some uniform data enabling to achieve a kind of spatial consistency. Another way of improving the accuracy of disparity maps is to take into account the evolution of areas in disparity maps in time. Indeed, due to the fact that disparity maps related to the display of a 3D movie evolve in the time, some techniques such as the one described in the document US 2012/0099767 focus on ensuring the consistency between disparity maps obtained from temporally consecutive frames (that comprise at least a left and a right view). These techniques enable to remove unwanted temporal artifacts. That kind of technique can also be combined with the previous mentioned ones as in the article *"Spatio-Temporal consistency in video disparity estimation"* by R. Khoshabeh published in the proceedings of IEEE International Conference on Acoustics, Speech and Signal Processing (ICASSP'11).

However, all the mentioned techniques have a common drawback. Indeed, these techniques do not prevent the occurrence of wrong matching of pixels that induces non accurate disparity maps. Moreover, in order to implement these techniques, complex operations have to be done, that use a lot of resources (especially they induce a heavy load for processors). The present technique overcomes these issues.

<u>Summary of the invention</u>

References in the specification to "one embodiment", "an embodiment", "an example embodiment", indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described.

The present invention is directed to a method for processing at least one disparity map associated to at least one left view and one right view of stereovision images. Such method is remarkable in that it comprises a step of determining at least one modified disparity map that comprises, for a given pixel or group of pixels, a modified disparity value determined in function of disparity values of said at least one disparity map associated to pixels that belong to a neighborhood of said given pixel or group of pixels, said disparity values being weighted in function of a value obtained from said at least one disparity map and at least one other disparity map.

The modified disparity map obtained via such method has a good spatial consistency. Therefore, it is easier and more efficient to compress such modified disparity map.

In a preferred embodiment, such method for processing is remarkable in that said at least one disparity map is a left disparity map obtained from said at least one left view and one right view of stereovision images, and said least one other disparity map is a right disparity map obtained from said at least one left view and one right view of stereovision images.

In a preferred embodiment, such method for processing is remarkable in that said at least one disparity map is a right disparity map obtained from said at least one left view and one right view of stereovision images, and said least one other disparity map is a left disparity map obtained from said at least one left view and one right view of stereovision images.

In a preferred embodiment, such method for processing is remarkable in that said modified disparity value for a given pixel $P_{i,j}$ having coordinates $(x_i, y_j)$ is determined by the following equation

$$d_n^A(x_i, y_j) = \frac{\sum_{t,v} W_{P_{ij}P_{tv}} \, d_{n-1}^A(P_{tv})}{\sum_{t,v} W_{P_{ij}P_{tv}}}$$

where pixels $P_{tv}$ belong to a neighborhood of said given pixel $P_{i,j}$, $A$ is an index indicating if said disparity value is a left disparity value or a right disparity value, $n$ is an index indicating that said disparity value is a modified disparity value, and $n$ - 1 is an index indicating that said disparity value is a disparity value from said at least one disparity map, and $W_{P_{ij}P_{tv}}$ is a weight associated to a disparity value $d_{n-1}^A(P_{tv})$.

In a preferred embodiment, such method for processing is remarkable in that said weight $W_{P_{ij}P_{tv}}$ is defined by the following equation: $W_{P_{ij}P_{tv}} = e^{-\left| d_{n-1}^L(x_t - d_{n-1}^R(x_t, y_v), y_v) + d_{n-1}^R(x_t, y_v) \right|}$, the pixel $P_{tv}$ having for coordinates $(x_t, y_v)$.

In a preferred embodiment, such method for processing is remarkable in that said weight $W_{P_{ij}P_{tv}}$ is defined by an equation $W_{P_{ij}P_{tv}} = e^{-(\delta_0^{-1}\Delta^{(0)}P_{ij}P_{tv} + \delta_1^{-1}\Delta^{(1)}P_{ij}P_{tv} + \delta_2^{-1}\Delta^{(2)}P_{ij}P_{tv} + \delta_3^{-1}\Delta^{(3)}P_{ij}P_{tv})}$, said pixel $P_{tv}$ having for coordinates $(x_t, y_v)$, where a function $\Delta^{(0)}P_{ij}P_{tv}$ is a function that takes into account the color similarity between pixels $P_{ij}$ and $P_{tv}$, that is defined by equation $\Delta^{(0)}P_{ij}P_{tv} = \sum_{c \in \{r,g,b\}} |I_c(P_{ij}) - I_c(P_{tv})|$ where a function $I_c(u)$ is the luminance of the $c$ color channel component which is either a red ($r$), green ($g$) or blue ($b$)) channel for a pixel $u$, a function $\Delta^{(1)}P_{ij}P_{tv}$ is defined by an equation $\Delta^{(1)}P_{ij}P_{tv} = |d_{n-1}^R(P_{ij}) - d_{n-1}^R(P_{tv})|$, a function $\Delta^{(2)}P_{ij}P_{tv}$ is defined by an equation $\Delta^{(2)}P_{ij}P_{tv} = ||P_{ij} - P_{tv}||^2$ where $\|.\|$ is the Euclidian norm, and a function $\Delta^{(3)}P_{ij}P_{tv}$ is defined by an equation $\Delta^{(3)}P_{ij}P_{tv} = d_{n-1}^L(x_t - d_{n-1}^R(x_t, y_v), y_v) + d_{n-1}^R(x_t, y_v)$, and elements $\delta_0$, $\delta_1$, $\delta_2$ and $\delta_3$ are weights applied respectively to $\Delta^{(0)}P_{ij}P_{tv}, \Delta^{(1)}P_{ij}P_{tv}, \Delta^{(2)}P_{ij}P_{tv}$ and $\Delta^{(3)}P_{ij}P_{tv}$.

In a preferred embodiment, such method for processing is remarkable in that said at least one disparity map is a left disparity map obtained from said at least one left view and one right view of stereovision images comprised in a frame associated to a given time $t$, and said at least one other disparity map is a left disparity map obtained from at least one left view and one right view of stereovision images comprised in a frame associated to an previous time $t$-1, close to said given time.

In another embodiment, such method for processing is remarkable in that said at least one disparity map is a right disparity map obtained from said at least one left view and one right view of stereovision images comprised in a frame associated to a given time $t$, and said at least one other disparity map is a right disparity map obtained from at least one left view and one right view of stereovision images comprised in a frame associated to an previous time $t$-1, close to said given time.

According to an exemplary implementation, the different steps of the method are implemented by a computer software program or programs, this software program comprising software instructions designed to be executed by a data processor of an electronic device (or module) according to the disclosure and being designed to control the execution of the different steps of this method.

Consequently, an aspect of the disclosure also concerns a program liable to be executed by a computer or by a data processor, this program comprising instructions to command the execution of the steps of a method as mentioned here above.

This program can use any programming language whatsoever and be in the form of a source code, object code or code that is intermediate between source code and object code, such as in a partially compiled form or in any other desirable form.

The disclosure also concerns an information medium readable by a data processor and comprising instructions of a program as mentioned here above.

The information medium can be any entity or device capable of storing the program. For example, the medium can comprise a storage means such as a ROM (which stands for *"Read Only Memory"*), for example a CD-ROM (which stands for *"Compact Disc - Read Only Memory"*) or a microelectronic circuit ROM or again a magnetic recording means, for example a floppy disk or a hard disk drive.

Furthermore, the information medium may be a transmissible carrier such as an electrical or optical signal that can be conveyed through an electrical or optical cable, by radio or by other means. The program can be especially downloaded into an Internet-type network.

Alternately, the information medium can be an integrated circuit into which the program is incorporated, the circuit being adapted to executing or being used in the execution of the method in question.

According to one embodiment, an embodiment of the disclosure is implemented by means of software and/or hardware components. From this viewpoint, the term "module" can correspond in this document both to a software component and to a hardware component or to a set of hardware and software components.

A software component corresponds to one or more computer programs, one or more subprograms of a program, or more generally to any element of a program or a software program capable of implementing a function or a set of functions according to what is described here below for the module concerned. One such software component is executed by a data processor of a physical entity (terminal, server, etc.) and is capable of accessing the hardware resources of this physical entity (memories, recording media, communications buses, input/output electronic boards, user interfaces, etc.).

Similarly, a hardware component corresponds to any element of a hardware unit capable of implementing a function or a set of functions according to what is described here below for the module concerned. It may be a programmable hardware component or a component with an integrated circuit for the execution of software, for example an integrated circuit, a smart card, a memory card, an electronic board for executing firmware (comprised in a TV set module), etc. In another embodiment, it is proposed an electronic device for processing at least one disparity map associated to at least one left view and one right view of stereovision images. Such electronic device is remarkable in that it comprises means for determining at least one modified disparity map that comprises, for a given pixel or group of pixels, a modified disparity value determined in function of disparity values of said at least one disparity map associated to pixels that belong to a neighborhood of said given pixel or group of pixels, said disparity values being weighted in function of a value obtained from said at least one disparity map and at least one other disparity map.

In another embodiment, such electronic device is remarkable in that said at least one disparity map is a left disparity map obtained from said at least one left view and one right view of stereovision images, and said least one other disparity map is a right disparity map obtained from said at least one left view and one right view of stereovision images.

In another embodiment, such electronic device is remarkable in that said at least one disparity map is a right disparity map obtained from said at least one left view and one right view of stereovision images, and said least one other disparity map is a left disparity map obtained from said at least one left view and one right view of stereovision images.

In another embodiment, such electronic device is remarkable in that said modified disparity value for a given pixel $P_{i,j}$ having coordinates $(x_i, y_j)$ is determined by means that can compute the following equation

$$d_n^A(x_i, y_j) = \frac{\sum_{t,v} W_{P_{ij}P_{tv}} \, d_{n-1}^A(P_{tv})}{\sum_{t,v} W_{P_{ij}P_{tv}}}$$ where pixels $P_{tv}$ belong to a neighborhood of said given pixel $P_{i,j}$, $A$ is an index indicating if said disparity value is a left disparity value or a right disparity value, $n$ is an index indicating that said disparity value is a modified disparity value, and $n$ - 1 is an index indicating that said disparity value is a disparity value from said at least one disparity map, and $W_{P_{ij}P_{tv}}$ is a weight associated to a disparity value $d_{n-1}^A(P_{tv})$.

In another embodiment, such electronic device is remarkable in that said weight $W_{P_{ij}P_{tv}}$ is defined by the following equation: $W_{P_{ij}P_{tv}} = e^{-\left|d^L_{n-1}(x_t - d^R_{n-1}(x_t, y_v), y_v) + d^R_{n-1}(x_t, y_v)\right|}$, the pixel $P_{tv}$ having for coordinates $(x_t, y_v)$.

In another embodiment, such electronic device is remarkable in that said weight $W_{P_{ij}P_{tv}}$ is defined by an equation

$W_{P_{ij}P_{tv}} = e^{-\left(\delta_0^{-1}\Delta^{(0)}{}_{P_{ij}P_{tv}} + \delta_1^{-1}\Delta^{(1)}{}_{P_{ij}P_{tv}} + \delta_2^{-1}\Delta^{(2)}{}_{P_{ij}P_{tv}} + \delta_3^{-1}\Delta^{(3)}{}_{P_{ij}P_{tv}}\right)}$, said pixel $P_{tv}$ having for coordinates $(x_t, y_v)$, where a function $\Delta^{(0)}{}_{P_{ij}P_{tv}}$ is a function that takes into account the color similarity between pixels $P_{ij}$ and $P_{tv}$, that is defined by equation $\Delta^{(0)}{}_{P_{ij}P_{tv}} = \sum_{c \in \{r,g,b\}} \left|I_c(P_{ij}) - I_c(P_{tv})\right|$ where a function $I_c(u)$ is the luminance of the $c$ color channel component which is either a red ($r$), green ($g$) or blue($b$)) channel for a pixel $u$, a function $\Delta^{(1)}{}_{P_{ij}P_{tv}}$ is defined by an equation $\Delta^{(1)}{}_{P_{ij}P_{tv}} = \left|d^R_{n-1}(P_{ij}) - d^R_{n-1}(P_{tv})\right|$, a function $\Delta^{(2)}{}_{P_{ij}P_{tv}}$ is defined by an equation $\Delta^{(2)}{}_{P_{ij}P_{tv}} = \left\|P_{ij} - P_{tv}\right\|^2$ where $\|.\|$ is the Euclidian norm, and a function $\Delta^{(3)}{}_{P_{ij}P_{tv}}$ is defined by an equation $\Delta^{(3)}{}_{P_{ij}P_{tv}} = d^L_{n-1}(x_t - d^R_{n-1}(x_t, y_v), y_v) + d^R_{n-1}(x_t, y_v)$, and elements $\delta_0$, $\delta_1$, $\delta_2$ and $\delta_3$ are weights applied respectively to $\Delta^{(0)}{}_{P_{ij}P_{tv}}, \Delta^{(1)}{}_{P_{ij}P_{tv}}, \Delta^{(2)}{}_{P_{ij}P_{tv}}$ and $\Delta^{(3)}{}_{P_{ij}P_{tv}}$.

Brief description of the figures

The above and other aspects of the invention will become more apparent by the following detailed description of exemplary embodiments thereof with reference to the attached drawings in which:

- Figure 1 presents a left view and a right view of stereovision images;
- Figure 2 presents a filtering device that takes as input two disparity map and outputs a refined disparity map, according to one embodiment of the invention;
- Figure 3 presents the use of a filtering device according to one embodiment of the invention that is temporally consistent;
- Figure 4 presents a device that can be used to perform one or several steps of methods or processing disclosed in the present document.

Detailed description

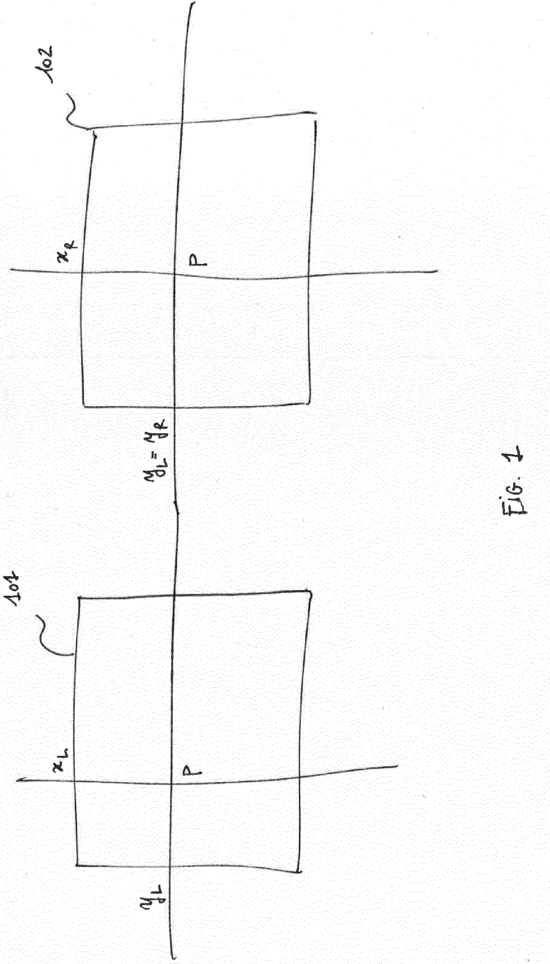

Figure 1 presents a left view and a right view of stereovision images. Let's remark that these images are aligned in the sense that epipolar lines between the two images are aligned. Hence, a pixel in one image is on the same line in the other image (i.e. they have the same "$y$" coordinate). The present invention takes into account some relationship between pixels of these images.

Indeed, the following equations hold for a same pixel $P$ in the left view image (i.e. the pixel $P$ has the following coordinates in the left view image: $(x_L, y)$), referenced 101, and in the right view image (i.e. the same pixel $P$ has the following coordinates in the right view image $(x_R, y)$), referenced 102:

$$x_R = x_L - d^L(x_L, y) \text{ and } x_L = x_R - d^R(x_R, y)$$

with $d^L(.,.)$ is the disparity value for the left view, and $d^R(.,.)$ is the disparity value for the right view. More precisely, the value $d^L(.,.)$ corresponds to the horizontal distance between two matching pixels, in that case from a pixel in the left view image that the equivalent is searched in the right view image. The value $d^R(.,.)$ corresponds to the horizontal distance between two matching pixels, in that case from a pixel in the right view image that the equivalent is searched in the left view image.

Therefore, from these definition, it is interesting to remark that the following equation must also hold : $d^L(x_L, y) = -d^R(x_R, y)$, that can also be written as $d^L(x_L, y) + d^R(x_R, y) = 0$, or also $d^L(x_L, y) + d^R(x_L - d_L(x_L, y), y) = 0$. The equation can also be written as follows: $d^L(x_R - d^R(x_R, y), y) + d^R(x_R, y) = 0$ However, in disparity estimation, it appears that such equation is not always verified due to approximation issues. Indeed, in the case that left and right view images comprise large un-textured areas, for pixels comprised in these areas, it appears that $d^L(x_L, y) + d^R(x_R, y) \gg 0$. One purpose of one embodiment of the invention is to provide a consistency between left and right disparity maps. In order to achieve this goal, a definition of consistency (from a spatial point of view) must be given: the left and right disparity maps are considered as being consistent if the following condition holds: $|d^L(x_L,y) + d^R(x_R,y)| \leq \varepsilon$, with a threshold $\varepsilon$ that is chosen so that $0 \leq \varepsilon \leq 2$.

One purpose of one embodiment of the invention is to use the consistency distance defined as

$$| d^L(x_L, y) + d^R(x_R, y)| = d^L(x_R - d^R(x_R,y), y) + d^R(x_R, y) = d^L(x_L, y) + d^R(x_L - d^L(x_L, y), y)$$

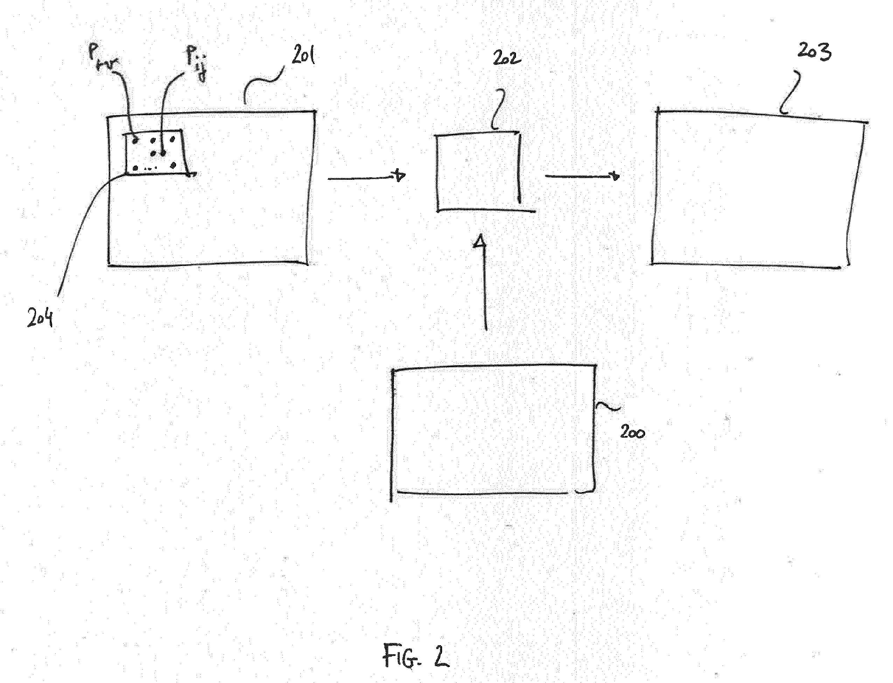

that can be used in a filtering process (see figure 2). Indeed, such relationship enables to define the following new kernel function: $e^{-|dL(x_L,y)+dR(x_L-dL(x_L,y),y)|/\sigma}$ with $\sigma$ being a parameter that can be used as an amplifying factor. This kernel behaves well in the philosophy of the bilateral filtering. Indeed, for perfectly consistent pixel pairs, the consistency distance is equal to zero and the kernel value is equal to one. While, with growing consistency distances, the kernel tends toward zero, hence the pixel weight will be very low and the corresponding disparity will not be propagated in the filtering. By introducing this kernel in the bilateral filter, only pixels for which the disparity is consistent are propagated.

Figure 2 presents a filtering device that takes as input a disparity map and outputs a refined disparity map, according to one embodiment of the invention.

In the state of the art, it is well known to apply to an estimated disparity map a filter (unilateral or bilateral) in order to refine a disparity map. For reminders, a filter can be viewed as a way to smoothen a given disparity map by substituting the disparity value of a pixel (or group of pixels) by a weighted mean of disparity values taken in the neighborhood of such pixel (or group of pixels). The figure 2 presents such filtering process that takes into account the relationship mentioned in the figure 1 (and more precisely the consistency from a disparity point of view). More precisely, a filtering device, referenced 202, receives as input a left disparity map, referenced 200, and a right disparity map, referenced 201.

The filter device 202 determines and outputs either a modified left disparity map or a modified right disparity map, such modified disparity map being referenced 203. In another embodiment, the filter device 202 outputs both modified disparity maps. The disparity value for a pixel positioned at the coordinates $(x_i, y_j)$ in the left disparity map 200 and in the right disparity map 201 are noted respectively $d_{n-1}^L(x_i, y_j)$ and $d_{n-1}^R(x_i, y_j)$, where $n$ is an integer corresponding to an index value. The disparity value for a pixel positioned at the coordinates $(x_i, y_j)$ in the modified right disparity map 203 or in the modified left disparity map 203 is noted respectively $d_n^R(x_i, y_j)$ and $d_n^L(x_i, y_j)$.

From the description of the figure 1, we must have $d_k^L(x_i - d_k^R(x_i, y_j), y_j) + d_k^R(x_i, y_j) = 0$, or $d_k^L(x_i, y_j) + d_k^R(x_i - d_k^L(x_i, y_j), y_j) = 0$, for all $k \in \mathbb{N}$, and $(i,j) \in \mathbb{N}^2$.

Now, let's describe the case where only the modified right disparity map 203 is outputted by the filter device 202.

In such embodiment, the filter device 202 comprises means for performing the following computation for each pixel $P_{ij}$ of the right disparity map 201: $d_n^R(P_{ij}) = d_n^R(x_i, y_j) = \dfrac{\sum_{t,v} W_{P_{ij}P_{tv}} \, d_{n-1}^R(P_{tv})}{\sum_{t,v} W_{P_{ij}P_{tv}}}$, that corresponds to the "new" or modified estimation of the disparity value for the pixel $P_{ij}$, noted $d_n^R(P_{ij}) = d_n^R(x_i, y_j)$, and for which several pixels $P_{tv}$ (which has the coordinates $(x_t, y_v)$) that are in the neighborhood of the pixel of interest $P_{ij}$ are used. Let's remark that $W_{P_{ij}P_{tv}}$ corresponds to the weight of the pixel $P_{tv}$ in the determination of the disparity of the pixel $P_{ij}$. In one embodiment, such neighborhood can be defined by a window that surrounds the pixel of interest $P_{ij}$ as the box referenced 204. In one embodiment, such box has a length of 51 pixels and a width of 21 pixels. In another embodiment, square box can be used, where the length of a side is equal to 21 pixels, or 51 pixels. The larger the size of the neighborhood is, the more surrounding pixels $P_{tv}$ are used in order to determine a disparity value. Such computation is a filtering computation. In some implementations, the size of the neighboring (that can be a square, a rectangle, a circle, etc.)) is a variable parameter (i.e. a non-fixed parameter). For example, in one embodiment, the neighborhood is a sliding window. According to one embodiment of the invention, the weight $W_{P_{ij}P_{tv}}$ is determined in function of the following distance value: $|d_{n-1}^L(x_t - d_{n-1}^R(x_t, y_v), y_v) + d_{n-1}^R(x_t, y_v)|$ or $|d_{n-1}^L(x_t, y_v) + d_{n-1}^R(x_t - d_{n-1}^L(x_t, y_v), y_v)|$ Hence, by using such distance value, the present invention aims to give more importance to consistent pixels around a given pixels in order to determine a disparity value. For example, the weight $W_{P_{ij}P_{tv}}$ can be defined as follows:

$$W_{P_{ij}P_{tv}} = e^{-|d_{n-1}^L(x_t - d_{n-1}^R(x_t, y_v), y_v) + d_{n-1}^R(x_t, y_v)|/\sigma}$$

In another embodiment, the weight $W_{xy_i}$ is defined as follows:

$$W_{P_{ij}P_{tv}} = e^{-F(d_{n-1}^L(x_t - d_{n-1}^R(x_t, y_v), y_v), d_{n-1}^R(x_t, y_v))/\sigma}$$

In one embodiment, the function $F$ can be defined as follows : $F(a,b) = |a + b|$. In another embodiment, the function $F$ can be defined as follows: $(a,b) = (a + b)^n$, with the parameter $n$ being a non negative integer. In another embodiment, $n$ is a real value. Indeed, in one embodiment, the value of the parameter $n$ is chosen as being equal to ½.
In another embodiment, the weight $W_{P_{ij}P_{tv}}$ is defined as follows:

$$W_{P_{ij}P_{tv}} = e^{-(\delta_0^{-1}\Delta^{(0)}{}_{P_{ij}P_{tv}} + \delta_1^{-1}\Delta^{(1)}{}_{P_{ij}P_{tv}} + \delta_2^{-1}\Delta^{(2)}{}_{P_{ij}P_{tv}} + \delta_3^{-1}\Delta^{(3)}{}_{P_{ij}P_{tv}})}$$

with $\Delta^{(0)}{}_{P_{ij}P_{tv}}$ is a function that takes into account the color similarity between pixels $P_{ij}$ and $P_{tv}$, that is defined as follows:

$\Delta^{(0)}{}_{P_{ij}P_{tv}} = \sum_{c \in \{r,g,b\}} |I_c(P_{ij}) - I_c(P_{tv})|$ with the function $I_c(u)$ is the luminance of the $c$ color channel component (i.e. which is either the red ($r$), green ($g$) or blue($b$)) for a pixel $u$. The function $\Delta^{(1)}{}_{P_{ij}P_{tv}}$ is defined as follows:

$\Delta^{(1)}{}_{P_{ij}P_{tv}} = |d_{n-1}^R(P_{ij}) - d_{n-1}^R(P_{tv})|$. Moreover, the function $\Delta^{(2)}{}_{P_{ij}P_{tv}}$ is defined as follows: $\Delta^{(2)}{}_{P_{ij}P_{tv}} =$

$||P_{ij} - P_{tv}||^2$ where $\|.\|$ is the Euclidian norm. At last, $\Delta^{(3)}{}_{P_{ij}P_{tv}} = d_{n-1}^L(x_t - d_{n-1}^R(x_t, y_v), y_v) + d_{n-1}^R(x_t, y_v)$ that was already mentioned previously. Let's remark that the elements $\delta_0, \delta_1, \delta_2$ and $\delta_3$ are weights applied respectively to $\Delta^{(0)}{}_{P_{ij}P_{tv}}, \Delta^{(1)}{}_{P_{ij}P_{tv}}, \Delta^{(2)}{}_{P_{ij}P_{tv}}$ and $\Delta^{(3)}{}_{P_{ij}P_{tv}}$.

Such new weight defines a filtering computation that can be viewed as a trilateral filter (compared to the bilateral filter known in the state of the art). With such trilateral filter, the left and right disparities are filtered at each level of a hierarchical search (such hierarchical search is depicted for example in the article : "Dense Disparity Estimation Using a HierarchicalMatching Technique from Uncalibrated StereoVision" by L. Nalpantidis et al., and published in the proceedings of the conference IST 2009 (International Workshop on Imaging Systems and Techniques). One very important advantage of such filtering technique according to one embodiment of the invention, beside the consistency, is that the disparity maps are also better (in term of quality of relevant disparity values). Usually, borders of foreground objects have always lacked some sharpness due to the propagation of bad disparities by the bilateral filter. Here, the bad disparity values have been often removed by the consistency distance kernel and good disparity propagated instead in that region, hence foreground object borders have improved and are much sharper than before.

In another embodiment of the invention, the filtering device 202 takes only as input a left view and a right view of stereovision images, and a disparity map (the left one or the right one). The filtering device 202 determines the "missing" disparity map (either the left one or the right one, depending on the disparity map inputted to the filtering device 202) that enables it to perform the same process as described previously.

In another embodiment of the invention, the filtering device takes only in input a left view and a right view of stereovision images. In that case, the filtering generates one or two disparity maps.

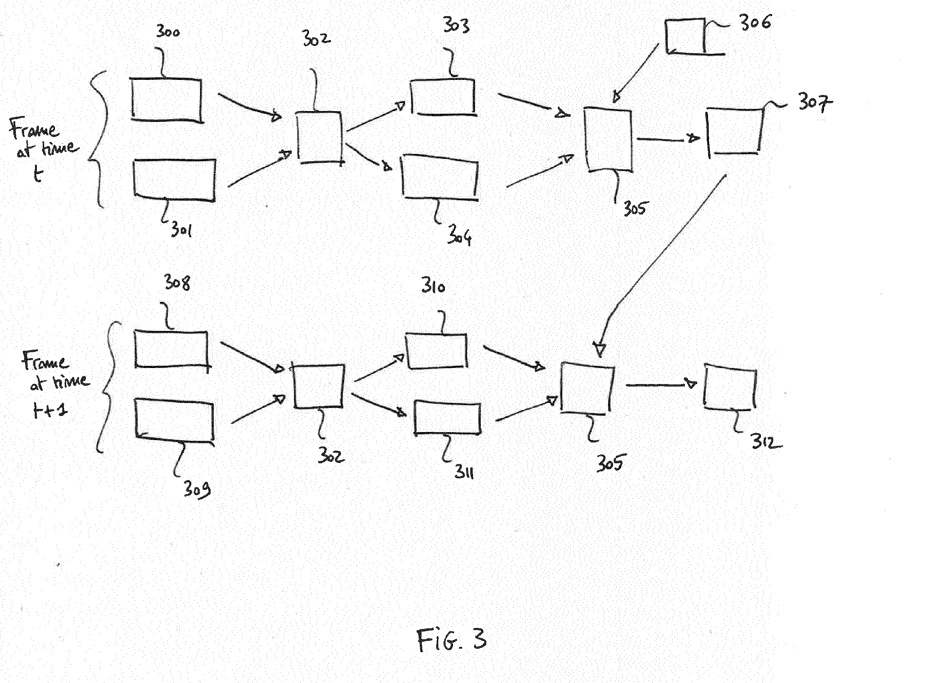

Figure 3 presents the use of a filtering device according to one embodiment of the invention that is temporally consistent.

In such embodiment, it is possible to refine the disparity map through the determination of temporal consistency in disparity maps.

More precisely, a frame at time $t$ that comprises a left view (referenced 300), and a right view (referenced 301) of stereovision images are provided to a device, referenced 302, that determines a left disparity map, referenced 303, and a right disparity map, referenced 304. Then the disparity maps 303 and 304 are used as input to a filtering device, referenced 305. Such filtering device 305 comprises means that enable it to perform the same process as the one depicted in relation with the figure 2. In one embodiment, at least one intermediate disparity map (either an intermediate right disparity map and/or an intermediate left right disparity) is obtained and the filtering device 305 takes also in input at least one disparity map obtained through the processing of the frame at time frame $t$ - 1 (corresponding to either a right and/or left disparity obtained from the processing of the frame $t$ - 1), named a previous disparity map, referenced 306. Then a filtering process that uses the consistency distance criteria between such at least one intermediate disparity map and such at least one previous disparity map is performed. More precisely, such filtering process is based on the fact that $d^L(x,y)$ at time $t$, noted $d^{L,(t)}(x,y)$ should be the same as $d^L(x,y)$ at time $t$ + 1, noted $d^{L,(t+1)}(x,y)$ (or on the fact that $d^R(x,y)$ at time $t$, noted $d^{R,(t)}(x,y)$ should be the same as $d^R(x,y)$ at time $t$ + 1, noted $d^{R,(t+1)}(x,y)$). Hence, the difference of these values should be equal to 0 (in case of a perfect matching). In that case, an additional kernel value $e^{-|d_{L,(t+1)}(x,y)-d_{L,(t)}(x,y)|/\sigma}$ can be used. In another embodiment, an additional kernel value $e^{-|d_{R,(t+1)}(x,y)-d_{R,(t)}(x,y)|\sigma}$ can be used. Let's remark that the parameter $\sigma$ is a parameter that can be used as an amplifying factor. In another embodiment of the invention, such filtering that can be qualified as a temporal filtering can use several previous disparity map from time $t$ - 1 to $t$ - $k$ (just until a cut was detected for example). The filtering device 305 outputs at least one disparity map, referenced 307 that is spatially and temporally consistent. The received frame at time $t$ + 1 that comprises a left view (referenced 308), and a right view (referenced 309) of stereovision images are provided to the device 302, that determines a left disparity map, referenced 310, and a right disparity map, referenced 311. Then the disparity maps 310 and 311 are used as input to a filtering device 305, as well as the disparity map, referenced 307 (that can be viewed at time $t$ + 1 as a previous disparity map). Then the filtering device 305 outputs at least one disparity map, referenced 312 that is spatially and temporally consistent, and such process is executed for all the received frames.

It should be pointed out that such filtering technique takes automatically into account the moving objects from frame $t$ to $t$ + 1. Indeed, an object that has moved induces an important consistency distance, and the filter weight will be nearly zero, and the pixel in the moving area won't be propagated by the filtering. There is no need here to distinguish moving from stationary pixels when applying the filtering, or no need to apply two different filtering in moving or stationary zones like in known prior art technique.

In another embodiment, the device 302 only outputs one disparity map (either the left one or the right one). It should also be noted that such filtering technique improves also the disparity maps of a single estimation where there was not a right disparity map to compare to remove and process inconsistent pixels.

The filtering method according to one embodiment of the invention can be implemented in such way that it can be executed by a GPU (for *"Graphics Processing Unit"*). Moreover, such filtering method is compliant with the context of real-time estimation.

In another embodiment, the use of such filtering method is combined with a cut detection algorithm, a panning and/or a zooming detection algorithm (or more generally an algorithm that is able to detect an important change in the scene) that de-activate the spatio-temporal consistency kernel. Hence, the filtering method according to one embodiment of the invention is linked to an output of such change detection algorithms.

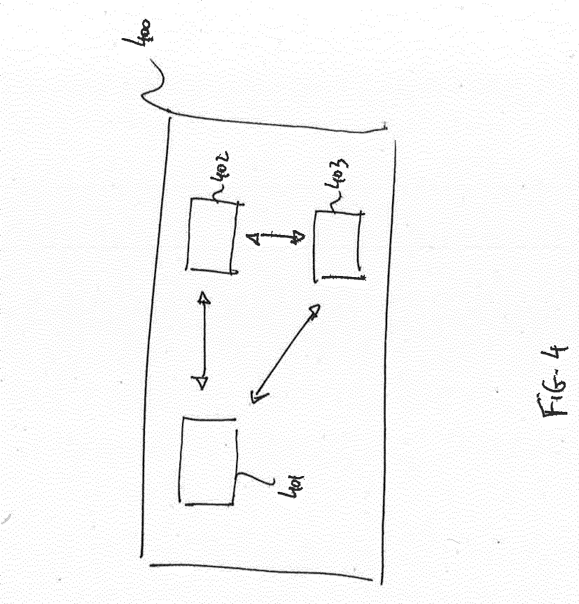

Figure 4 presents a device that can be used to perform one or several steps of methods or process disclosed in the present document.

Such device referenced 400 comprises a computing unit (for example a CPU, for "*Central Processing Unit*"), referenced 401, and one or several memory units (for example a RAM (for "*Random Access Memory*") block in which intermediate results can be stored temporarily during the execution of instructions of a computer program, or a ROM block in which, among other things, computer programs are stored, or an EEPROM ("*Electrically-Erasable Programmable Read-Only Memory*") block, or a flash block) referenced 402. Computer programs are made of instructions that can be executed by the computing unit. Such device 400 can also comprise a dedicated unit, referenced 403, constituting an input-output interface to allow the device 400 to communicate with other devices. In particular, this dedicated unit 403 can be connected with an antenna (in order to perform communication without contacts), or with serial ports (to carry communications "contact"). Let's remark that the arrows in Figure 4 means that the linked unit can exchange data through buses for example together.

In an alternative embodiment, some or all of the steps of the method previously described, can be implemented in hardware in a programmable FPGA ("*Field Programmable Gate Array*") component or ASIC ("*Application-Specific Integrated Circuit*") component.

In an alternative embodiment, some or all of the steps of the method previously described, can be executed on an electronic device comprising memory units and processing units as the one disclosed in the Figure 4.

**Claims**

1. Method for processing at least one disparity map associated to at least one left view and one right view of stereovision images, said method being **characterized in that** it comprises a step of determining at least one modified disparity map that comprises, for a given pixel or group of pixels, a modified disparity value determined in function of disparity values of said at least one disparity map associated to pixels that belong to a neighborhood of said given pixel or group of pixels, said disparity values being weighted in function of a value obtained from said at least one disparity map and at least one other disparity map.

2.  Method for processing according to claim 1, **characterized in that** said at least one disparity map is a left disparity map obtained from said at least one left view and one right view of stereovision images, and said least one other disparity map is a right disparity map obtained from said at least one left view and one right view of stereovision images.

3.  Method for processing according to claim 1, **characterized in that** said at least one disparity map is a right disparity map obtained from said at least one left view and one right view of stereovision images, and said least one other disparity map is a left disparity map obtained from said at least one left view and one right view of stereovision images.

4.  Method for processing according to any claims 1 to 3, **characterized in that** said modified disparity value for a given pixel $P_{i,j}$ having coordinates $(x_i, y_j)$ is determined by the following equation $d_n^A(x_i, y_j) = \dfrac{\sum_{t,v} W_{P_{ij}P_{tv}} \, d_{n-1}^A(P_{tv})}{\sum_{t,v} W_{P_{ij}P_{tv}}}$ where pixels $P_{tv}$ belong to a neighborhood of said given pixel $P_{i,j}$, $A$ is an index indicating if said disparity value is a left disparity value or a right disparity value, $n$ is an index indicating that said disparity value is a modified disparity value, and $n - 1$ is an index indicating that said disparity value is a disparity value from said at least one disparity map, and $W_{P_{ij}P_{tv}}$ is a weight associated to a disparity value $d_{n-1}^A(P_{tv})$.

5.  Method for processing according to claim 4, **characterized in that** said weight $W_{P_{ij}P_{tv}}$ is defined by the following equation: $W_{P_{ij}P_{tv}} = e^{-|d_{n-1}^L(x_t - d_{n-1}^R(x_t,y_v), y_v) + d_{n-1}^R(x_t,y_v)|}$ , the pixel $P_{tv}$ having for coordinates $(x_t, y_v)$.

6.  Method for processing according to claim 4, **characterized in that** said weight $W_{P_{ij}P_{tv}}$ is defined by an equation $W_{P_{ij}P_{tv}} = e^{-(\delta_0^{-1}\Delta^{(0)}{}_{P_{ij}P_{tv}} + \delta_1^{-1}\Delta^{(1)}{}_{P_{ij}P_{tv}} + \delta_2^{-1}\Delta^{(2)}{}_{P_{ij}P_{tv}} + \delta_3^{-1}\Delta^{(3)}{}_{P_{ij}P_{tv}})}$ , said pixel $P_{tv}$ having for coordinates $(x_t, y_v)$, where a function $\Delta^{(0)}{}_{P_{ij}P_{tv}}$ is a function that takes into account the color similarity between pixels $P_{ij}$ and $P_{tv}$, that is defined by equation $\Delta^{(0)}{}_{P_{ij}P_{tv}} = \sum_{c \in \{r,g,b\}} |I_c(P_{ij}) - I_c(P_{tv})|$ where a function $I_c(u)$ is the luminance of the $c$ color channel component which is either a red ($r$), green ($g$) or blue($b$)) channel for a pixel $u$, a function $\Delta^{(1)}{}_{P_{ij}P_{tv}}$ is defined by an equation $\Delta^{(1)}{}_{P_{ij}P_{tv}} = |d_{n-1}^R(P_{ij}) - d_{n-1}^R(P_{tv})|$, a function $\Delta^{(2)}{}_{P_{ij}P_{tv}}$ is defined by an equation $\Delta^{(2)}{}_{P_{ij}P_{tv}} = ||P_{ij} - P_{tv}||^2$ where $\|.\|$ is the Euclidian norm, and a function $\Delta^{(3)}{}_{P_{ij}P_{tv}}$ is defined by an equation $\Delta^{(3)}{}_{P_{ij}P_{tv}} = d_{n-1}^L(x_t - d_{n-1}^R(x_t,y_v), y_v) + d_{n-1}^R(x_t,y_v)$ ,and elements $\delta_0, \delta_1, \delta_2$ and $\delta_3$ are weights applied respectively to $\Delta^{(0)}{}_{P_{ij}P_{tv}}, \Delta^{(1)}{}_{P_{ij}P_{tv}}, \Delta^{(2)}{}_{P_{ij}P_{tv}}$ and $\Delta^{(3)}{}_{P_{ij}P_{tv}}$.

7.  Method for processing according to claim 1, **characterized in that** said at least one disparity map is a left disparity map obtained from said at least one left view and one right view of stereovision images comprised in a frame associated to a given time $t$, and said at least one other disparity map is a left disparity map obtained from at least one left view and one right view of stereovision images comprised in a frame associated to an previous time $t$-$1$, close to said given time.

8.  Method for processing according to claim 1, **characterized in that** said at least one disparity map is a right disparity map obtained from said at least one left view and one right view of stereovision images comprised in a frame associated to a given time $t$, and said at least one other disparity map is a right disparity map obtained from at least one left view and one right view of stereovision images comprised in a frame associated to an previous time $t$-$1$, close to said given time.

9. A computer-readable and non-transient storage medium storing a computer program comprising a set of computer-executable instructions to implement a method for processing at least one disparity map when the instructions are executed by a computer, wherein the instructions comprise instructions, which when executed, configure the computer to perform a method for processing of claims 1 to 8.

10. Electronic device for processing at least one disparity map associated to at least one left view and one right view of stereovision images, said electronic device being **characterized in that** it comprises means for determining at least one modified disparity map that comprises, for a given pixel or group of pixels, a modified disparity value determined in function of disparity values of said at least one disparity map associated to pixels that belong to a neighborhood of said given pixel or group of pixels, said disparity values being weighted in function of a value obtained from said at least one disparity map and at least one other disparity map.

11. Electronic device according to claim 10, **characterized in that** said at least one disparity map is a left disparity map obtained from said at least one left view and one right view of stereovision images, and said least one other disparity map is a right disparity map obtained from said at least one left view and one right view of stereovision images.

12. Electronic device according to claim 10, **characterized in that** said at least one disparity map is a right disparity map obtained from said at least one left view and one right view of stereovision images, and said least one other disparity map is a left disparity map obtained from said at least one left view and one right view of stereovision images.

13. Electronic device according to any claims 10 to 12, **characterized in that** said modified disparity value for a given pixel $P_{i,j}$ having coordinates $(x_i, y_j)$ is determined by means that can compute the following equation $d_n^A(x_i, y_j) =$

$$\sum_{t,v} W_{P_{ij}P_{tv}} \, d_{n-1}^A(P_{tv}) \Big/ \sum_{t,v} W_{P_{ij}P_{tv}}$$ where pixels $P_{tv}$ belong to a neighborhood of said given pixel $P_{ij}$, $A$ is an index indicating if said disparity value is a left disparity value or a right disparity value, $n$ is an index indicating that said disparity value is a modified disparity value, and $n - 1$ is an index indicating that said disparity value is a disparity value from said at least one disparity map, and $W_{P_{ij}P_{tv}}$ is a weight associated to a disparity value

$$d_{n-1}^A(P_{tv}).$$

14. Electronic device according to claim 13, **characterized in that** said weight $W_{P_{ij}P_{tv}}$ is defined by the following equation:

$$W_{P_{ij}P_{tv}} = e^{-\left| d_{n-1}^L(x_t - d_{n-1}^R(x_t, y_v), y_v) + d_{n-1}^R(x_t, y_v) \right|}$$ , the pixel $P_{tv}$ having for coordinates $(x_t, y_v)$.

15. Electronic device according to claim 13, **characterized in that** said weight $W_{P_{ij}P_{tv}}$ is defined by an equation

$$W_{P_{ij}P_{tv}} = e^{-\left( \delta_0^{-1}\Delta^{(0)}{}_{P_{ij}P_{tv}} + \delta_1^{-1}\Delta^{(1)}{}_{P_{ij}P_{tv}} + \delta_2^{-1}\Delta^{(2)}{}_{P_{ij}P_{tv}} + \delta_3^{-1}\Delta^{(3)}{}_{P_{ij}P_{tv}} \right)}$$ , said pixel $P_{tv}$ having for coordinates $(x_t, y_v)$, where a function $\Delta^{(0)}{}_{P_{ij}P_{tv}}$ is a function that takes into account the color similarity between pixels $P_{ij}$ and $P_{tv}$, that is defined by equation $\Delta^{(0)}{}_{P_{ij}P_{tv}} = \sum_{c \in \{r,g,b\}} |I_c(P_{ij}) - I_c(P_{tv})|$ where a function $I_c(u)$ is the luminance of the $c$ color channel component which is either a red ($r$), green ($g$) or blue($b$)) channel for a pixel $u$, a function $\Delta^{(1)}{}_{P_{ij}P_{tv}}$ is defined by an equation $\Delta^{(1)}{}_{P_{ij}P_{tv}} = \left| d_{n-1}^R(P_{ij}) - d_{n-1}^R(P_{tv}) \right|$, a function $\Delta^{(2)}{}_{P_{ij}P_{tv}}$ is defined by an equation $\Delta^{(2)}{}_{P_{ij}P_{tv}} = ||P_{ij} - P_{tv}||^2$ where $\|.\|$ is the Euclidian norm, and a function $\Delta^{(3)}{}_{P_{ij}P_{tv}}$ is defined by an equation $\Delta^{(3)}{}_{P_{ij}P_{tv}} = d_{n-1}^L(x_t - d_{n-1}^R(x_t, y_v), y_v) + d_{n-1}^R(x_t, y_v)$, and elements $\delta_0, \delta_1, \delta_2$ and $\delta_3$ are weights applied respectively to $\Delta^{(0)}{}_{P_{ij}P_{tv}}, \Delta^{(1)}{}_{P_{ij}P_{tv}}, \Delta^{(2)}{}_{P_{ij}P_{tv}}$ and $\Delta^{(3)}{}_{P_{ij}P_{tv}}$.

Fig. 1

Fig. 2

FIG. 3

EP 2 860 975 A1

FIG. 4

EUROPEAN SEARCH REPORT

Application Number

EP 13 30 6395

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | WO 2013/079602 A1 (FRAUNHOFER GES FORSCHUNG [DE]) 6 June 2013 (2013-06-06) * abstract; figure 2 * * page 4, line 35 - page 5, line 36 * * page 11, line 10 - page 12, line 5 * * page 13, lines 1-15 * * page 1, line 6 * | 1-4,9-13 | INV. H04N13/00 |
| A | | 5,6,14, 15 | |
| Y | US 2013/162763 A1 (CHENG CHAO-CHUNG [TW]) 27 June 2013 (2013-06-27) * abstract; figures 1,4,6 * * paragraph [0023] * | 1-4,9-13 | |
| Y | US 2012/308119 A1 (OGATA MASAMI [JP] ET AL) 6 December 2012 (2012-12-06) * abstract; figures 1-3 * * paragraphs [0085], [0107], [0110], [0119], [0125], [0136], [0140], [0144], [0154], [0158], [0162], [0166], [0179] * | 1-4,9-13 | |
| Y,D | US 2013/176300 A1 (ROBERT PHILIPPE [FR] ET AL) 11 July 2013 (2013-07-11) * abstract; figures 1-4 * * paragraphs [0037], [0040], [0041], [0051], [0052] * | 1-4,9-13 | TECHNICAL FIELDS SEARCHED (IPC)  H04N |

~~The present search report has been drawn up for all claims~~

| Place of search | Date of completion of the search | Examiner |
|---|---|---|
| The Hague | 23 January 2014 | Mao, Pauline |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

Europäisches
Patentamt

European
Patent Office

Office européen
des brevets

**Application Number**

EP 13 30 6395

---

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

---

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-6, 9-15

☐ The present supplementary European search report has been drawn up for those parts of the European patent application which relate to the invention first mentioned in the claims (Rule 164 (1) EPC).

**Europäisches Patentamt**
**European Patent Office**
**Office européen des brevets**

**LACK OF UNITY OF INVENTION**
**SHEET B**

Application Number

EP 13 30 6395

The Search Division considers that the present European patent application does not comply with the requirements of unity of invention and relates to several inventions or groups of inventions, namely:

1. claims: 1-6, 9-15

   Processing for improving the spatial consistency of disparity maps
   ---

2. claims: 7, 8

   Processing for improving the temporal consistency of disparity maps
   ---

**ANNEX TO THE EUROPEAN SEARCH REPORT
ON EUROPEAN PATENT APPLICATION NO.**

EP 13 30 6395

This annex lists the patent family members relating to the patent documents cited in the above-mentioned European search report.
The members are as contained in the European Patent Office EDP file on
The European Patent Office is in no way liable for these particulars which are merely given for the purpose of information.

23-01-2014

| Patent document cited in search report | Publication date | Patent family member(s) | | Publication date |
|---|---|---|---|---|
| WO 2013079602 A1 | 06-06-2013 | NONE | | |
| US 2013162763 A1 | 27-06-2013 | CN | 103179414 A | 26-06-2013 |
| | | EP | 2608549 A2 | 26-06-2013 |
| | | US | 2013162763 A1 | 27-06-2013 |
| US 2012308119 A1 | 06-12-2012 | CN | 102821290 A | 12-12-2012 |
| | | JP | 2012253666 A | 20-12-2012 |
| | | US | 2012308119 A1 | 06-12-2012 |
| US 2013176300 A1 | 11-07-2013 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2013079602 A
- US 20120321172 A
- WO 2012177166 A
- US 20130176300 A
- US 20120099767 A

### Non-patent literature cited in the description

- **R. KHOSHABEH.** Spatio-Temporal consistency in video disparity estimation. *proceedings of IEEE International Conference on Acoustics, Speech and Signal Processing (ICASSP'11,* 2011
- **L. NALPANTIDIS et al.** Dense Disparity Estimation Using a HierarchicalMatching Technique from Uncalibrated StereoVision. *proceedings of the conference IST 2009 (International Workshop on Imaging Systems and Techniques,* 2009